# EUROPEAN PATENT APPLICATION

(11) **EP 4 059 640 A1**
(43) Date of publication of application: **21.09.2022**
(21) Application number: 22162534.6
(22) Date of filing: 16.03.2022
(51) Int. Cl.: B22F 10/30, B22F 12/80, B22F 12/90, B65D 90/48, G01G 11/08, G01G 19/52, B33Y 30/00, B33Y 40/00, B33Y 50/02

(54) **INTEGRATED SCALE FOR POWDER IN ADDITIVE MANUFACTURING MACHINES**

(30) Priority: 19.03.2021 US 202117207454
(71) Applicant: Collins Engine Nozzles, Inc., West Des Moines, IA 50265 (US)
(72) Inventor: SAMO, Joseph, Johnston, 50131 (US); OCKEN, Thomas J., Des Moines, 50310 (US); HALLBAUER, Nancy, Adel, 50003 (US); VIERHOUT, Robert W., Cumming, 50061 (US)
(74) Representative: Dehns

(57) **Abstract**

A system comprising an additive manufacturing machine (102) configured to fuse stock powder, a supply vessel (108) connected to the additive manufacturing machine (102) for supplying the stock powder to the additive manufacturing machine (102), and a weight sensor system (110) connected to the supply vessel (108). A controller (112) operatively is connected to the weight sensor system (110) configured to receive signals indicative of a weight of the stock powder in the supply vessel (108). The controller (112) is configured to determine weight of the stock powder based on the signals.

## Description

### BACKGROUND

### 1. Field

This disclosure relates generally to additive manufacturing, and more particularly to managing powder supplies in additive manufacturing processes.

### 2. Description of Related Art

Certain additive manufacturing processes, such as laser powder bed fusion (L-PBF) and directed energy deposition (DED), stock powder is supplied to be fused into parts. There is a considerable amount of unfused powder that can be reused if it is collected or recycled in the machine. The unfused powder constitutes useable inventory of the stock powder, but uncontrollable variables during the process cause inaccuracies in tracking the inventory of powder. For example, waste from an onboard sieve, consolidated material plus trapped powder within the additively manufactured parts or specimens, and powder vacuumed from the cleaning process can all be uncontrolled with respect to amount of powder involved.

Various systems have been used to estimate sources of inaccuracy, but there is still a margin of error associated with each estimated source of inaccuracy. Cumulatively, the margins of error on the sources of inaccuracy make it difficult to keep a tight figure on inventory and appropriately allocate powder usage into a specific build cycle. Moreover, collecting the data and running the estimates based on the data require considerable person hours.

The conventional techniques have been considered satisfactory for their intended purpose. However, there is an ever present need for improved systems and methods for improved powder tracking and allocation. This disclosure provides a solution for this need.

### SUMMARY

A system comprising an additive manufacturing machine configured to fuse stock powder, a supply vessel connected to the additive manufacturing machine for supplying the stock powder to the additive manufacturing machine, and a weight sensor system connected to the supply vessel. A controller operatively is connected to the weight sensor system configured to receive signals indicative of a weight of the stock powder in the supply vessel. The controller is configured to determine weight of the stock powder based on the signals. The controller can include an automated inventory tracking system configured to track powder inventory without manual user input on powder losses.

The weight sensor can be positioned below the supply vessel and be supported from below by a hard point of the additive manufacturing machine. The supply vessel can be supported exclusively by the weight sensor system and can be otherwise unconstrained by reaction forces contributing to supporting weight of the supply vessel. The weight sensor system can include a plurality of load cells situated in a load bearing path between the supply vessel and the additive manufacturing machine. All connections between the supply vessel and the additive manufacturing machine, aside from the weight sensor system, can be flexible tubing and/or floating or soft mounts to avoid supporting any weight of the supply vessel through any pathway other than through the weight sensor system.

The additive manufacturing machine can further include a surge hopper, and a plurality of powder recycle vessels. The plurality of powder recycle vessels can all be downstream of a build platform of the additive manufacturing machine with respect to flow of powder, while the supply vessel and surge vessel can be positioned upstream of the build platform.

The additive manufacturing machine can be a laser powder bed fusion (LPBF) machine or a directed energy deposition (DED) machine, and the controller can configured to calculate weight of the stock powder used based on at least one of cumulative loss of stock powder due to waste from an onboard sieve, consolidated material and trapped powder, and powder vacuumed from cleaning the additive manufacturing machine.

A method of additive manufacturing comprises weighing stock powder in a supply vessel within the additive manufacturing machine prior to using the stock powder for a build to determine an initial powder weight and using a portion of the stock powder for the build. The method can include weighing the stock powder remaining in the supply vessel after using a portion of the stock powder for the build to determine a final powder weight, and determining stock powder inventory based on difference between the initial powder weight and the final powder weight.

Tracking powder usage during a build can make sure the additive manufacturing machine has enough powder to complete the build. The method can further include preventing the additive manufacturing machine from starting a build based on initial powder weight if there is insufficient stock powder in the additive manufacturing machine for the build. Tracking inventory can be automated inventory tracking without manual user input on powder losses.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic perspective view of an embodiment of an additive manufacturing system constructed in accordance with the present disclosure, showing a supply vessel having a weight sensor system; and
Fig. 2 is a schematic perspective view of an embodiment of an additive manufacturing system constructed in accordance with the present disclosure, showing a supply vessel having another weight sensor system.

### DETAILED DESCRIPTION

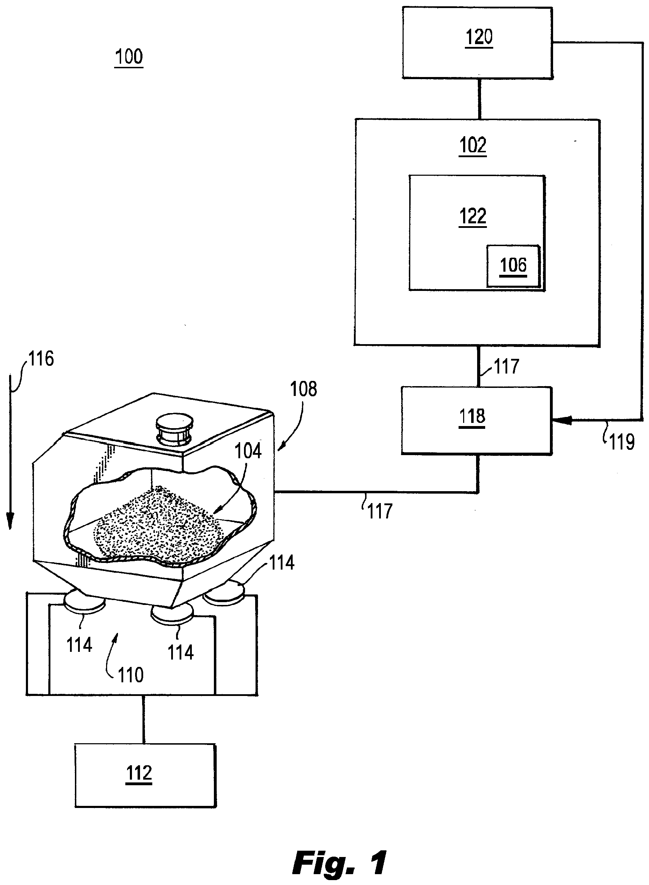

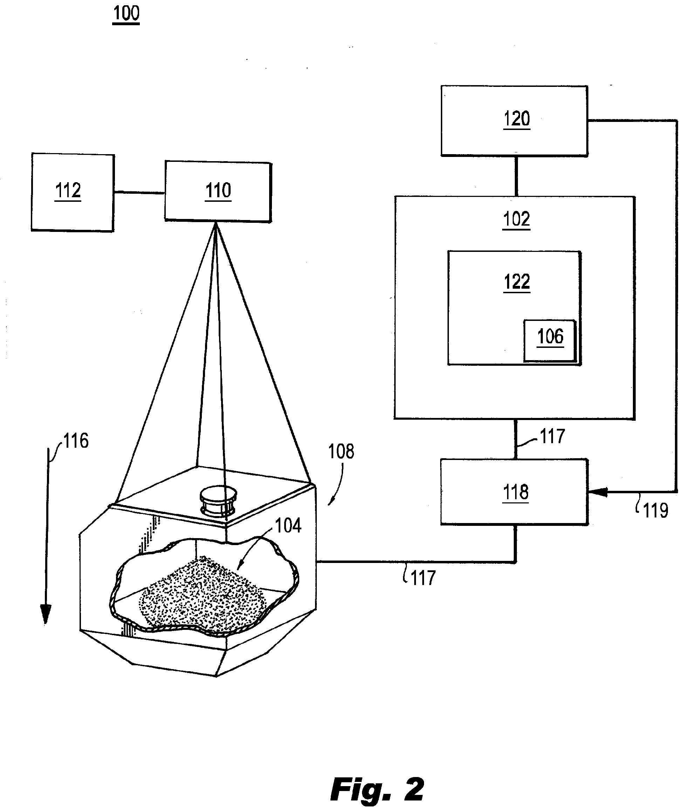

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to improve powder tracking and allocation.

An additive manufacturing system 100 can include an additive manufacturing machine 102 configured to fuse stock powder 104 into parts 106 using any suitable method, for example using laser powder bed fusion (LPBF) and/or directed energy deposition (DED). A supply vessel 108 can be connected to the additive manufacturing machine 102 for supplying the stock powder 104 to the additive manufacturing machine 102.

A weight sensor system 110 can be connected to the supply vessel 108 in any suitable position for measuring a weight of the supply vessel 108. For example, as shown in Fig. 1, the weight sensor system 110 can be positioned below the supply vessel 108 and be supported from below by a hard point of the additive manufacturing machine 102, or, as shown in Fig. 2, the supply vessel 108 can be suspended from the weight sensor system 110. In either case, the supply vessel 108 can be supported exclusively by the weight sensor system 110 and can be otherwise unconstrained by other reaction forces contributing to supporting weight of the supply vessel 110. A controller 112 can be operatively connected to the weight sensor system 110 to receive signals indicative of a weight of powder 104 in the supply vessel 108 configured to determine weight of the powder 104.

In embodiments, the weight sensor system 110 can include a plurality of load cells 114 situated in a load bearing path 116 between the supply vessel 108 and the additive manufacturing machine 102. Because the supply vessel 108 is conventionally rigidly connected to the additive manufacturing machine 102, any and all connections 117 between the supply vessel 108 and the additive manufacturing machine 102, aside from the weight sensor system 110, can be can be non-rigid, for example flexible tubing and/or floating or soft mounts to avoid supporting any weight of the supply vessel 108 through any pathway other than through the weight sensor system 110.

The additive manufacturing machine 102 can further include a surge hopper 118, and a plurality of powder recycle vessels 120 (e.g. an onboard reclamation system) to recycle powder through recycle conduit 119. The plurality of powder recycle vessels 120 can all be downstream of a build platform 122 of the additive manufacturing machine 102 with respect to flow of powder 104, while the supply vessel 108 and surge hopper 118 can be positioned upstream of the build platform 122.

The controller 112 can include an automated inventory tracking system configured to track powder inventory without manual user input on powder losses. For example, if the additive manufacturing machine 102 is a LPBF machine, the controller 112 can be configured to calculate weight of the stock powder 104 used, based on at least one of cumulative losses due to waste from an onboard sieve, consolidated material and trapped powder, and/or powder vacuumed from cleaning the additive manufacturing machine 102. If the additive manufacturing machine 102 is a DED machine, the controller 112 can be configured to calculate weight of the stock powder 104 used, based on at least one of cumulative losses due to powder used to create material layers during directed energy deposition and/or unused powder vacuumed from cleaning the additive manufacturing machine 102.

In embodiments, the controller can include machine readable instructions configured to cause the controller to perform a calibration of load cells 114 to introduced powder weight may be utilized to provide accurate count of powder weight as determined by multipoint calibration or a calibration lookup table. The calibration can either standardized by the system design, or as part of a machine commissioning to account for all machine manufacturing variables. Such calibration can account for externalities including, but not limited to, soft mounting features and/or connections 117 such as the flexible tubing.

A method of additive manufacturing can include weighing stock powder 104 in a supply vessel 108 within the additive manufacturing machine 102 prior to using the stock powder 104 for a build to determine an initial powder weight. The stock powder 104 can then be used for the build and a final weight of the stock powder remaining in the supply vessel 108 after using a portion of the stock powder 104 for the build can be determined. For example, determining inventory of the stock powder 104 can be based on the difference between the initial powder weight and the final powder weight.

Tracking powder usage during a build (e.g. long and/or tall builds) can ensure the additive manufacturing machine 102 has enough powder to complete the build. For example, if the initial powder weight indicates there is insufficient stock powder 104 in the additive manufacturing machine 102 for the build, the additive manufacturing machine 102 can be prevented from starting the build. Additionally, tracking inventory can be automated inventory tracking without manual user input on powder losses.

An additive manufacturing machine typically allocates powder by part CAD volume calculation and three estimates of powder weight during three cleaning operations. Conventional powder tracking systems include many points for error that can lead to weight inaccuracies such as, operator error to weigh powder from each step and record data, powder handling at multiple steps, and inaccurate sensors that cannot accurately determine weight due to the way powder is used from the tank. Each of these uncontrollable process variables cause inventory to be inaccurate and can lead to amassed inventory and allocation inaccuracies.

The methods and systems of the present disclosure, as described above and shown in the drawings, provide for accurate powder inventory tracking. This provides more accurate and add real time usage statistics to better manage inventory and order allocation, as well as removes the need for additional powder handling during the process by the operator, reducing potential environmental health and safety concerns. While the apparatus and methods of the subject disclosure have been shown and described, those skilled in the art will readily appreciate that changes and/or modifications may be made thereto without departing from the scope of the subject disclosure.

## Claims

1. A system comprising:
an additive manufacturing machine (102) configured to fuse stock powder;
a supply vessel (108) connected to the additive manufacturing machine (102) for supplying the stock powder to the additive manufacturing machine (102);
a weight sensor system (110) connected to the supply vessel (108); and
a controller (112) operatively connected to the weight sensor system (110), wherein the controller (112) is configured to receive signals indicative of a weight of the stock powder in the supply vessel (108), wherein the controller (112) is configured to determine weight of the stock powder based on the signals.

2. The system as recited in claim 1, wherein the weight sensor is positioned below the supply vessel (108) and is supported from below by a hard point of the additive manufacturing machine (102).

3. The system as recited in claim 2, wherein the supply vessel (108) is supported exclusively by the weight sensor system (110) and is otherwise unconstrained by reaction forces contributing to supporting weight of the supply vessel (108).

4. The system as recited in claim 3, wherein all connections between the supply vessel (108) and the additive manufacturing machine (102), aside from the weight sensor system (110), are flexible tubing and/or floating or soft mounts to avoid supporting any weight of the supply vessel (108) through any pathway other than through the weight sensor system (110).

5. The system as recited in any preceding claim, wherein the additive manufacturing machine (102) further includes a surge hopper, and a plurality of powder recycle vessels.

6. The system as recited in claim 5, wherein the plurality of powder recycle vessels are all downstream of a build platform of the additive manufacturing machine (102) with respect to flow of powder, and wherein the supply vessel (108) and surge vessel are upstream of the build platform.

7. The system as recited in any preceding claim, wherein the weight sensor system (110) includes a plurality of load cells situated in a load bearing path between the supply vessel (108) and the additive manufacturing machine (102).

8. The system as recited in any preceding claim, wherein the additive manufacturing machine (102) is a laser powder bed fusion (LPBF) machine, and wherein the controller (112) is configured to calculate weight of the stock powder used based on at least one of cumulative loss of stock powder due to waste from an onboard sieve, consolidated material and trapped powder, and powder vacuumed from cleaning the additive manufacturing machine (102).

9. The system as recited in any preceding claim, wherein the additive manufacturing machine (102) is a directed energy deposition (DED) machine, and wherein the controller (112) is configured to calculate weight of the stock powder used based on at least one of cumulative loss of stock powder due to waste from an onboard sieve, consolidated material and trapped powder, and powder vacuumed from cleaning the additive manufacturing machine.

10. The system as recited in any preceding claim, wherein the controller (112) includes an automated inventory tracking system configured to track powder inventory without manual user input on powder losses.

11. A method of additive manufacturing comprising:
weighing stock powder in a supply vessel (108) within the additive manufacturing machine (102) prior to using the stock powder for a build to determine an initial powder weight;
using a portion of the stock powder for the build;
weighing the stock powder remaining in the supply vessel (108) after using a portion of the stock powder for the build to determine a final powder weight; and
determining stock powder inventory based on difference between the initial powder weight and the final powder weight.

12. The method as recited in claim 11, further comprising tracking powder usage during a build to make sure the additive manufacturing machine (102) has enough powder to complete the build.

13. The method as recited in claim 11 or 12, further comprising preventing the additive manufacturing machine (102) from starting a build based on initial powder weight if there is insufficient stock powder in the additive manufacturing machine (102) for the build.

14. The method as recited in claim 11, 12 or 13, wherein weighing the stock powder includes weighing the supply vessel (108) wherein the supply vessel (108) is supported exclusively by a weight sensor system (110) and is otherwise unconstrained by other reaction forces contributing to supporting weight of the supply vessel (108).

15. The method as recited in any of claims 11 to 14, further comprising performing automated inventory tracking without manual user input on powder losses.
